## Europäisches Patentamt

## European Patent Office

## Office européen des brevets

(19)

(11) Veröffentlichungsnummer: **0 218 184**
**B1**

(12) **EUROPÄISCHE PATENTSCHRIFT**

(45) Veröffentlichungstag der Patentschrift:
03.01.90

(51) Int. Cl.⁴: **C08G 77/32**, C08L 83/04

(21) Anmeldenummer: **86113512.7**

(22) Anmeldetag: **01.10.86**

(54) Verfahren zum Stabilisieren von Organopolysiloxanen.

(30) Priorität: **03.10.85 DE 3535379**

(43) Veröffentlichungstag der Anmeldung:
**15.04.87 Patentblatt 87/16**

(45) Bekanntmachung des Hinweises auf die Patenterteilung:
**03.01.90 Patentblatt 90/1**

(84) Benannte Vertragsstaaten:
**AT BE CH DE FR GB IT LI NL**

(56) Entgegenhaltungen:
**GB-A- 2 066 832**
**US-A- 2 698 861**
**US-A- 3 779 987**

(73) Patentinhaber: **WACKER-CHEMIE GMBH,**
**Prinzregentenstrasse 22, D-8000 München 22(DE)**

(72) Erfinder: **Jira, Reinhard, Dr.Dipl.-Chem., Heilig Kreuz 1,**
**D-8263 Burghausen(DE)**
Erfinder: **Ottlinger, Ralph, Dr. Dipl.-Chem.,**
**Partenkirchener Strasse 10, D-8110 Murnau(DE)**

## Beschreibung

Beispielsweise aus US 3 779 987 (ausgegeben 18. Dezember 1973, J.S. Razzano, General Electric Company) ist es bereits bekannt, in Organopolysiloxanen, die Alkalimetallhydroxyd enthalten, das Alkalimetallhydroxyd zu neutralisieren. Dadurch werden die Organopolysiloxane gegenüber Viskositätsänderungen, welche durch alkalische Verbindungen bewirkt werden, stabilisiert.

Es bestand nun die Aufgabe, Organopolysiloxane, die vor dem Stabilisieren Alkalimetallhydroxyd, Alkalimetallsilanolat oder Alkalimetallsiloxanolat oder ein Gemisch aus mindestens zwei derartiger alkalischer Verbindungen enthalten, durch Neutralisieren dieser alkalischen Verbindungen gegenüber durch alkalische Verbindungen bewirkte Viskositätsänderungen zu stabilisieren, wobei die so stabilisierten Organopolysiloxane auch nach Lagerung von mindestens 6 Monaten bei Raumtemperatur noch klar und farblos sind, ein Überschuß an Neutralisationsmittel auf Metalle nicht korrodierend wirkt und leicht durch Destillation entfernt werden kann, das Neutralisationsmittel zumindest verhältnismäßig wenig toxisch ist und verhältnismäßig leicht im Organopolysiloxan verteilt werden kann und bei der weiteren Verarbeitung des Organopolysiloxans keine Belästigungen durch unangenehme Gerüche auftreten. Diese Aufgabe wird durch die Erfindung gelöst.

Gegenstand der Erfindung ist ein Verfahren zum Stabilisieren von Organopolysiloxanen, die vor dem Stabilisieren Alkalimetallhydroxyd, Alkalimetallsilanolat oder Alkalimetallsiloxanolat oder ein Gemisch aus mindestens zwei derartiger alka lischer Verbindungen enthalten. Gegenüber durch alkalische Verbindungen bewirkte Viskositätsänderungen durch Neutralisieren von alkalischer Verbindung, dadurch gekennzeichnet, daß die alkalische(n) Verbindung(en) mit aus Kohlenstoff-, Wasserstoff- und Sauerstoffatomen sowie gegebenenfalls mindestens einem Halogenatom aufgebauter Verbindung, in der 2, 3 oder 4 Kohlenwasserstoffgruppen an das gleiche Kohlenstoffatom jweils über Sauerstoff gebunden sind, oder mit Acylessigsäureester neutralisiert werden, wobei diese Neutralisationsmittel bei Raumtemperatur und 1020 hPa (abs.) flüssig sind und einen Siedepunkt von höchstens 200 °C bei 1020 hPa (abs.) haben.

Als Organopolysiloxane können nach dem erfindungsgemäßen Verfahren beliebige Alkalimetallhydroxyd, Alkalimetallsilanolat oder Alkalimetallsiloxanolat oder ein Gemisch aus mindestens zwei derartiger alkalische Verbindungen enthaltende Organopolysiloxane gegenüber durch alkalische Verbindungen bewirkte Viskositätsänderungen stabilisiert werden, die auch bisher durch Neutralisieren von alkalischer Verbindung in diesen Organopolysiloxanen gegenüber durch alkalische Verbindungen bewirkte Viskositätsänderungen stabilisiert werden konnten. Vorzugsweise handelt es sich dabei um solche der Formel

$AO(SiR_2O)_mA$ ,

worin R gleiche oder verschiedene, einwertige Kohlenwasserstoffreste, die gegenüber Alkali nicht allzu empfindliche Substituenten aufweisen können, A Wasserstoff oder einen Rest der Formel

$-SiR_3$ ,

wobei R die vorstehend dafür angegebene Bedeutung hat, bedeutet und m eine ganze Zahl im Wert von mindestens 50 ist.

Obwohl durch derartige, häufig verwendete Formeln nicht dargestellt, können bis zu insgesamt 5 Molprozent der Einheiten der Formel $SiR_2O$ durch andere, meist jedoch lediglich als mehr oder weniger schwer vermeidbare Verunreinigungen vorliegende Siloxaneinheiten, wie Einheiten der Formel $RSiO_{3/2}$, wobei R die oben dafür angegebene Bedeutung hat, oder $SiO_{4/2}$-Einheiten, oder ein Gemisch derartiger Einheiten ersetzt sein.

Beispiele für einwertige Kohlenwasserstoffreste R in den oben angegebenen Formeln oder für die SiC-gebundenen Kohlenwasserstoffreste in den erfindungsgemäß zu stabilisierenden Organopolysiloxanen sind Alkylreste, wie der Methyl-, Ethyl-, n-Propyl-, Isopropyl-, n-Butyl-, sec.-Butyl- und 2-Ethylhexylrest sowie Octadecylreste; Kohlenwasserstoffreste mit aliphatischen Kohlenstoff-Kohlenstoff-Doppelbindungen, wie der Vinyl- und Allylrest; Arylreste, wie der Phenylrest und Xenylreste; Alkarylreste, wie Tolyl- und Xylylreste; und Aralkylreste, wie der Benzylrest.

Beispiele für einwertige, substituierte Kohlenwasserstoffreste R in den oben angegebenen Formeln oder für SiC-gebundene substituierte Kohlenwasserstoffreste in den erfindungsgemäß zu stabilisierenden Organopolysiloxanen sind insbesondere solche mit in der jeweiligen Gruppierung gegenüber Alkali nicht allzu empfindlichem Halogen, wie der 3,3,3-Trifluorpropylrest, o-, m- und p-Chlorphenylreste, der 1,1,2,2-Tetrafluorethoxypropyl- und der 1,1,2,2,3,3-Hexafluorpropyloxypropylrest.

Schon wegen der leichteren Zugänglichkeit sind vorzugsweise mindestens 50 % der Anzahl der SiC-gebundenen organischen Reste in den erfindungsgemäß zu stabilisierenden Organopolysiloxanen oder der Reste R in den oben angegebenen Formeln Methylreste. Die gegebenenfalls vorliegenden übrigen organischen Reste sind vorzugsweise Vinyl- oder Phenylreste oder Gemische solcher Reste.

Die Viskosität der Organopolysiloxane, gegenüber deren durch alkalische Verbindungen bewirkte Änderungen die Organopolysiloxane erfindungsgemäß stabilisiert werden sollen, beträgt vorzugsweise $1.10^3$ bis $5.10^7$ mm²·s⁻¹ bei 25°C.

Die größte Bedeutung dürfte das erfindungsgemäße Verfahren für solche Organopolysiloxane der oben angegebenen Formel haben, worin A Wasserstoff oder ein Rest der Formel $-SiR_3$, wie der Trimethylsilyl- oder Dimethylvinylsilylrest ist, oder ein Teil der A Wasserstoff bedeutet, während die übrigen A Reste der Formel $-SiR_3$ sind.

Es kann eine Art von Organopolysiloxan stabilisiert werden. Es können aber auch Gemische aus mindestens zwei verschiedenen Arten von Organopolysiloxanen stabilisiert werden.

Bei den Alkalimetallhydroxiden, Alkalimetallsilanolaten oder Alkalimetallsiloxanolaten, die nach dem

erfindungsgemäßen Verfahren neutralisiert werden können, kann es sich um beliebige derartige Verbindungen handeln, die auch bisher in Organopolysiloxanen neutralisiert werden konnten.

Sie liegen in Organopolysiloxanen vorzugsweise deshalb vor, weil sie als Katalysatoren für Kondensation (Polymerisation) und/oder Äquilibrierung bei der Herstellung der Organopolysiloxane verwendet wurden.

Bei den erfindungsgemäß im Organopolysiloxan zu neutralisierenden Alkalimetallhydroxyden kann es sich um Lithium-, Natrium-, Kalium-, Rubidium- oder Cäsiumhydroxid oder um Gemische aus mindestens zwei derartiger Alkalimetallhydroxyde handeln. Natriumhydroxyd und Kaliumhydroxyd sind wegen ihrer leichteren Zugänglichkeit als Alkalimetallhydroxyde bevorzugt.

Ein einzelnes Beispiel für ein Alkalimetallsilanolat ist Kaliummethylsilanolat, das auch als Kaliummethylsilikonat bekannt ist.

Beispiele für Alkalimetallsiloxanolate sind Kaliumdimethylsiloxanolate. Derartige Alkalimetallsiloxanolate dürften sich auch z.B. beim Kondensieren (Polymerisieren) und/oder Äquilibrieren von cyclischem oder linearem Dimethylpolysiloxan mittels Alkalimetallhydroxyd bilden.

In den erfindungsgemäß zu stabilisierenden Organopolysiloxanen liegt zu neutralisierende alkalische Verbindung meist in Mengen von 0,0001 bis 0,1 Gewichtsprozent, insbesondere 0,0005 bis 0,01 Gewichtsprozent, jeweils berechnet als elementares Alkalimetall und bezogen auf das Gewicht der jeweiligen Organopolysiloxanmenge, vor.

Vorzugsweise sind die aus Kohlenstoff-, Wasserstoff- und Sauerstoffatomen sowie gegebenenfalls mindestens einem Halogenatom aufgebauten Verbindungen, in denen 2, 3 oder 4 Kohlenwasserstoffgruppen an das gleiche Kohlenstoffatom jeweils über Sauerstoff gebunden sind, solche der Formeln

$CO(OR^1)_2$ ,

worin $R^1$ gleiche oder verschiedene, von aliphatischen Kohlenstoff-Kohlenstoff-Mehrfachbindungen freie Kohlenwasserstoffreste mit 1 bis 10 Kohlenstoffatomen je Rest bedeutet,

$R^2C(OR^1)_3$ ,

worin $R^1$ die vorstehend dafür angegebene Bedeutung hat und $R^2$ Wasserstoff, Halogen oder ein einwertiger, von aliphatischen Kohlenstoff-Kohlenstoff-Mehrfachbindungen freier Kohlenwasserstoffrest mit 1 bis 10 Kohlenstoffatomen je Rest ist, der halogeniert sein kann, oder

$C(OR^1)_4$ ,

worin $R^1$ die oben dafür angegebene Bedeutung hat.

Beispiele für Kohlenwasserstoffreste $R^1$ sind Alkylreste, wie der Methyl-, Ethyl-, n-Propyl-, Isopropyl-, n-Butyl-, sec.-Butyl-, tert.-Butyl- und 2-Ethylhexylrest, Arylreste, wie der Phenylrest und Xenylreste; Alkarylreste, wie Tolyl- und Xylylreste; und Aralkylreste, wie der Benzylrest.

Die Beispiele für Kohlenwasserstoffreste $R^1$ gelten im vollen Umfang auch für die Kohlenwasserstoffreste $R^2$. Vorzugsweise enthalten Kohlenwasserstoffreste $R^2$ jedoch höchstens 3 Kohlenstoffatome je Rest. Die Beispiele für halogenierte Kohlenwasserstoffreste R gelten im vollen Umfang auch für halogenierte Kohlenwasserstoffreste $R^2$.

Einzelne Beispiele für Verbindungen der Formel $CO(OR^1)_2$ , also für Kohlensäureester, sind Dimethylcarbonat und Diethylcarbonat.

Einzelne Beispiele für Verbindungen der Formel $R^2C(OR^1)_3$ , also für Orthocarbonsäureester, sind Orthoameisensäuretrimethylester, Orthoameisensäuretriethylester und Orthoessigsäuretrimethylester.

Einzelne Beispiele für Verbindungen der Formel $C(OR^1)_4$ , also für Orthokohlensäureester, sind Orthokohlensäuretetramethylester und Orthokohlensäuretetraethylester.

Die ebenfalls erfindungsgemäß als Neutralisationsmittel verwendbaren Acylessigsäureester sind vorzugsweise solche der Formel

$R^1COCH_2COOR^1$ ,

worin $R^1$ die oben dafür angegebene Bedeutung hat. Einzelne Beispiele für derartige beta-Ketoester sind Acetessigsäuremethylester und Acetessigsäureethylester.

Es kann eine Art von erfindungsgemäß verwendetem Neutralisationsmittel eingesetzt werden. Es können aber auch Gemische aus mindestens zwei verschiedenen Arten derartiger Neutralisationsmittel eingesetzt werden.

Vorzugsweise werden die erfindungsgemäß verwendeten Neutralisationsmittel in Mengen von 1 bis 5 Grammäquivalenten über Sauerstoff an Kohlenstoff gebundener Kohlenwasserstoffgruppe je Grammatom Alkalimetall eingesetzt.

Das Neutralisieren von erfindungsgemäß zu neutralisierender alkalischer Verbindung erfolgt beim Vermischen von erfindungsgemäß verwendetem Neutralisationsmittel mit erfindungsgemäß zu stabilisierendem Organopolysiloxan.

Das erfindungsgemäße Verfahren wird vorzugsweise bei -5°C bis +200°C, insbesondere bei Raumtemperatur bis 180°C durchgeführt. Das erfindungsgemäße Verfahren kann beim Druck der umgebenden Atmosphäre, also z.B. bei 1020 hPa (abs.), oder bei höheren Drücken durchgeführt werden.

Das erfindungsgemäße Verfahren kann absatzweise, halbkontinuierlich oder vollkontinuierlich durchgeführt werden.

Um eine gute Verteilung der bei dem erfindungsgemäßen Verfahren verwendeten Stoffe ineinander zu gewährleisten, wird das Gemisch dieser Stoffe vorzugsweise bewegt, beispielsweise in einem Planetenmischer, einem Kneter oder in einer Zahnradpumpe.

Nach dem Neutralisieren wird überschüssiges Neutralisationsmittel und durch Umsetzung von Neutralisationsmittel mit alkalischer Verbindung gebildetes destillierbares Produkt vorzugsweise abdestilliert, was vorzugsweise unter vermindertem Druck erfolgt.

Die erfindungsgemäß stabilisierten Organopolysiloxane können für alle Zwecke verwendet werden, bei denen auch die nach den bisher bekannten Verfahren gegenüber durch alkalische Verbindungen bewirkte Viskositätsänderungen stabilisierten Organopolysiloxane eingesetzt werden konnten, z.B. als Fadengleitmittel und anderen Anwendungen von nicht-kondensierbaren Organopolysiloxanölen, zur Herstellung von Organopolysiloxanelastomeren und zur Herstellung von klebrige Stoffe abweisenden Überzügen.

Beispiel 1

In einem Kneter werden 500 g eines in den endständigen Einheiten je eine Si-gebundene Hydroxylgruppe aufweisenden Dimethylpolysiloxans mit einer Viskosität von 120 mm$^2$ .s$^{-1}$ bei 25°C auf 150°C erwärmt. In das erwärmte Organopolysiloxan werden 10 Gewichts-ppm (Gewichtsteile je Million Gewichtsteile), bezogen auf sein Gewicht, KOH eingeknetet und dann wird die so erhaltene Mischung bei 10 bis 1000 Pa (abs.) und 150°C so lange geknetet, bis sie eine Viskosität von etwa 30 000 mm$^2$ .s$^{-1}$ bei 25°C erreicht hat. In das so erhaltene Organopolysiloxan werden bei 150°C 0,04 g Dimethylcarbonat eingeknetet. Dann wird bei 150°C noch 30 Minuten bei etwa 1000 hPa (abs.) und 10 Minuten bei 10 bis 1000 Pa (abs.) geknetet. Das so erhaltene Organopolysiloxan hat eine Viskosität von 31 000 mm$^2$ .s$^{-1}$ bei 25°C und ist klar und farblos. Auch nach 6 Monaten Lagerung dieses Organopolysiloxans bei Raumtemperatur ist keine Änderung seiner Viskosität oder seines Aussehens festzustellen.

Beispiel 2

Ein Gemisch aus 370 g des in den endständigen Einheiten je eine Si-gebundene Hydroxylgruppe aufweisenden Dimethylpolysiloxans mit einer Viskosität von 120 mm$^2$ .s$^{-1}$ bei 25°C, 135 g durch Trimethylsiloxygruppen endblockiertem Dimethylpolysiloxan mit einer Viskosität von 100 mm$^2$ .s$^{-1}$ und 0,05 g KOH wird 6 Stunden bei 80°C und 10 bis 1000 Pa (abs.) gerührt, dann mit 0,61 g Orthokohlensäuretetramethylester vermischt und auf 150°C erwärmt. Dann wird bei 150°C noch 30 Minuten bei etwa 1000 hPa (abs.) und noch 10 Minuten bei 10 bis 1000 Pa (abs.) gerührt. Zur Überprüfung der Vollständigkeit der Neutralisation des Kaliumhydroxyds wird eine Probe des so erhaltenen Organopolysiloxans 2 Stunden auf 200°C erwärmt. Der dadurch entstandene Gewichtsverlust beträgt 1,3 Gewichtsprozent, bezogen auf das Gewicht dieser Probe vor diesem Erwärmen. Die Viskosität des Organopolysiloxans betrug vor dem Vermischen mit dem Ester 1013 mm$^2$ .s$^{-1}$ bei 25°C und nach dem Vermischen mit dem Ester und weiterem Rühren, wie oben angegeben, 1033 mm$^2$ .s$^{-1}$. Das so stabilisierte Organopolysiloxan ist klar und farblos. Auch nach 6 Monaten Lagerung dieses Organopolysiloxans bei Raumtemperatur ist keine Änderung seiner Viskosität oder seines Aussehens festzustellen.

Beispiel 3

In einem Kneter werden 500 g des in den endständigen Einheiten je eine Si-gebundene Hydroxylgruppe aufweisenden Dimethylpolysiloxans mit einer Viskosität von 120 mm$^2$ .s$^{-1}$ bei 25°C auf 150°C erwärmt. In das erwärmte Organopolysiloxan werden 10 Gewichts-ppm, bezogen auf sein Gewicht, KOH eingeknetet und dann wird die so erhaltene Mischung bei 10 bis 1000 Pa (abs.) und 150°C so lange geknetet, bis sie eine Viskosität von etwa 50 000 mm$^2$ .s$^{-1}$ erreicht hat. In das so erhaltene Organopolysiloxan werden bei 150°C 0,046 g Acetessigsäureethylester eingeknetet. Dann wird bei 150°C noch 30 Minuten bei etwa 1000 hPa (abs.) und 10 Minuten bei 10 bis 1000 Pa (abs.) geknetet. Das so erhaltene Organopolysiloxan hat eine Viskosität von 54 700 mm$^2$ .s$^{-1}$ und ist klar und farblos. Auch nach 6 Monaten Lagerung dieses Organopolysiloxans ist keine Änderung seiner Viskosität oder seines Aussehens festzustellen.

Beispiel 4

In einem Kneter werden 500 g eines in den endständigen Einheiten je eine Si-gebundene Hydroxylgruppe aufweisenden Dimethylpolysiloxans mit einer Viskosität von 120 mm$^2$ .s$^{-1}$ bei 25°C auf 150°C erwärmt. In das erwärmte Organopolysiloxan werden 0,1 Gewichts-%, bezogen auf sein Gewicht, Kaliumdimethylsiloxanolat (etwa 20 Dimethylsiloxaneinheiten je Kaliumatom) eingeknetet und dann wird die so erhaltene Mischung bei 10 bis 1000 Pa (abs.) und 150°C so lange geknetet, bis sie eine Viskosität von etwa 20 000 mm$^2$ .s$^{-1}$ bei 25°C erreicht hat. In das so erhaltene Organopolysiloxan werden bei 150°C 0,08 g Dimethylcarbonat eingeknetet. Dann wird bei 150°C noch 30 Minuten bei etwa 1000 Pa (abs.) und 10 Minuten bei 10 bis 1000 hPa (abs.) geknetet. Das so erhaltene Organopolysiloxan hat eine Viskosität von 22 000 mm$^2$ .s$^{-1}$ bei 25°C und ist klar und farblos. Auch nach 6 Monaten Lagerung dieses Organopolysiloxans bei Raumtemperatur ist keine Änderung seiner Viskosität oder seines Aussehens festzustellen.

**Patentansprüche**

1. Verfahren zum Stabilisieren von Organopolysiloxanen, die vor dem Stabilisieren Alkalimetallhydroxyd, Alkalimetallsilanolat oder Alkalimetallsiloxanolat oder ein Gemisch aus mindestens zwei derartiger alkalischer Verbindungen enthalten, gegenüber durch alkalische Verbindungen bewirkte Viskositätsänderungen durch Neutralisieren von alkalischer Verbindung, **dadurch gekennzeichnet**, daß die alkalische(n) Verbindung(en) mit aus Kohlenstoff-, Wasserstoff- und Sauerstoffatomen sowie gegebenenfalls mindestens einem Halogenatom aufgebauter Verbindung, in der 2, 3 oder 4 Kohlenwasserstoffgruppen an das gleiche Kohlenstoffatom jeweils über Sauerstoff gebunden sind, oder mit Acylessigsäureester neutralisiert werden, wobei diese Neutralisationsmittel bei Raumtemperatur und 1020 hPa (abs.) flüssig sind und einen Siedepunkt von höchstens 200 °C bei 1020 hPa (abs.) haben.

2. Verfahren nach Anspruch 1, **dadurch gekennzeichnet**, daß das oder ein Neutralisationsmittel ein Kohlensäureester der Formel

$$CO(OR^1)_2 ,$$

worin R¹ gleiche oder verschiedene, von aliphatischen Kohlenstoff-Kohlenstoff-Mehrfachbindungen freie Kohlenwasserstoffreste mit 1 bis 10 Kohlenstoffatomen je Rest bedeutet, ist.

3. Verfahren nach Anspruch 1 oder 2, **dadurch gekennzeichnet**, daß das oder ein Neutralisationsmittel Dimethylcarbonat ist.

4. Verfahren nach Anspruch 1, **dadurch gekennzeichnet**, daß das oder ein Neutralisationsmittel ein Orthocarbonsäureester der Formel
R²C(OR¹)₃ ,
worin R¹ die in Anspruch 2 dafür angegebene Bedeutung hat und R² Wasserstoff, Halogen oder ein einwertiger, von aliphatischen Kohlenstoff-Kohlenstoff-Mehrfachbindungen freier Kohlenwasserstoffrest mit 1 bis 10 Kohlenstoffatomen je Rest ist, der halogeniert sein kann, ist.

5. Verfahren nach Anspruch 1 oder 4, **dadurch gekennzeichnet**, daß das oder ein Neutralisationsmittel Orthoameisensäuretrimethylester ist.

6. Verfahren nach Anspruch 1, **dadurch gekennzeichnet**, daß das oder ein Neutralisationsmittel ein Orthokohlensäureester der Formel
C(OR¹)₄ ,
worin R¹ die in Anspruch 2 dafür angegebene Bedeutung hat, ist.

7. Verfahren nach Anspruch 1 oder 6, **dadurch gekennzeichnet**, daß das oder ein Neutralisationsmittel Orthokohlensäuretetramethylester ist.

8. Verfahren nach Anspruch 1, **dadurch gekennzeichnet**, daß das oder ein Neutralisationsmittel ein Acylessigsäureester der Formel
R¹COCH₂COOR¹ ,
worin R¹ die in Anspruch 2 dafür angegebene Bedeutung hat, ist.

9. Verfahren nach Anspruch 1 oder 8, **dadurch gekennzeichnet**,
daß das oder ein Neutralisationsmittel Acetessigsäureethylester ist.

## Claims

1. Process for stabilizing organopolysiloxanes which, before stabilization, contain alkali metal hydroxide, alkali metal silanolate or alkali metal siloxanolate or a mixture of at least two alkaline compounds of this type, against viscosity changes caused by alkaline compounds, by neutralizing the alkaline compound, characterized in that the alkaline compound(s) is (are) neutralized using a compound which is built up from carbon, hydrogen and oxygen atoms and optionally at least one halogen atom in which 2, 3 or 4 hydrocarbon groups are bonded to the same carbon atom, in each case via oxygen, or using acylacetic acid esters, these neutralization agents being liquid at room temperature and 1020 hPa (abs.) and having a maximum boiling point of 200°C at 1020 hPa (abs.).

2. Process according to Claim 1, characterized in that the or a neutralization agent is a carbonic acid ester of the formula
CO(OR¹)₂
in which R¹ denotes identical or different hydrocarbon radicals which have 1 to 10 carbon atoms per radical and which are free from aliphatic carbon-carbon multiple bonds.

3. Process according to Claim 1 or 2, characterized in that the or a neutralization agent is dimethyl carbonate.

4. Process according to Claim 1, characterized in that the or a neutralization agent is an orthocarboxylic acid ester of the formula
R²C(OR¹)₃
in which R¹ has the meaning given for R¹ in Claim 2, and R² is hydrogen, halogen or a monovalent hydrocarbon radical which has 1 to 10 carbon atoms per radical and which is free from aliphatic carbon-carbon multiple bonds and which may be halogenated.

5. Process according to Claim 1 or 4, characterized in that the or a neutralization agent is trimethyl orthoformate.

6. Process according to Claim 1, characterized in that the or a neutralization agent is an orthocarbonic acid ester of the formula C(OR¹)₄ in which R¹ has the meaning given for R¹ in Claim 2.

7. Process according to Claim 1 or 6, characterized in that the or a neutralization agent is tetramethyl orthocarbonate.

8. Process according to Claim 1, characterized in that the or a neutralization agent is an acylacetic acid ester of the formula
R¹COCH₂COOR¹
in which R¹ has the meaning given for R¹ in Claim 2.

9. Process according to Claim 1 or 8, characterized in that the or a neutralization agent is ethyl acetoacetate.

## Revendications

1. Procédé pour stabiliser des polyorganosiloxanes (qui, avant la stabilisation, contiennent de l'hydroxyde de métal alcalin, du silanolate de métal alcalin ou du siloxanolate de métal alcalin ou un mélange d'au moins deux de tels composés alcalins), à l'encontre des variations de viscosité dues aux composés alcalins, par neutralisation du composé alcalin, procédé caractérisé en ce qu'on effectue la neutralisation du ou des composés alcalins à l'aide d'un composé formé d'atomes de carbone, d'hydrogène et d'oxygène ainsi qu'éventuellement d'au moins un atome d'halogène, dans lequel deux, trois ou quatre groupes hydrocarbonés sont fixés, chaque fois par l'intermédiaire de l'oxygène, sur le même atome de carbone, ou à l'aide d'un ester d'acide acylacétique, ces agents de neutralisation étant liquides à la température ambiante et sous une pression absolue de 1020 hPa et ayant un point d'ébullition qui est au maximum de 200°C sous une pression absolue de 1020 hPa.

2. Procédé selon la revendication 1, caractérisé en ce que l'agent de neutralisation, ou un agent de neutralisation, est un ester d'acide carbonique de formule:
CO(OR¹)₂,
dans laquelle R¹ représente des restes d'hydrocarbures identiques ou différents, dépourvus de liaisons multiples aliphatiques de carbone à carbone et comportant 1 à 10 atomes de carbone par reste.

3. Procédé selon la revendication 1 ou 2, caractérisé en ce que le ou un agent de neutralisation est le carbonate de diméthyle.

4. Procédé selon la revendication 1, caractérisé en ce que le ou un agent de neutralisation est un ester d'acide orthocarbonique de formule:

$R^2C(OR^1)_3$,

dans laquelle $R^1$ a le sens indiqué à ce propos à la revendication 2 et $R^2$ représente un atome d'hydrogène, un atome d'halogène ou un reste d'hydrocarbures monovalents, dépourvus de liaisons multiples aliphatiques de carbone à carbone et comportant 1 à 10 atomes de carbone par reste, qui peut être halogéné.

5. Procédé selon l'une des revendications 1 ou 4, caractérisé en ce que le ou un agent de neutralisation est de l'ester triméthylique d'acide orthoformique.

6. Procédé slon la revendication 1, caractérisé en ce que le ou un agent de neutralisation est un ester d'acide orthocarbonique de formule:

$C(OR^1)_4$,

dans laquelle $R^1$ a le sens indiqué à ce propos à la revendication 2.

7. Procédé selon la revendication 1 ou 6, caractérisé en ce que le ou un agent de neutralisation est l'ester tétraméthylique de l'acide orthocarbonique.

8. Procédé selon la revendication 1, caractérisé en ce que le ou un agent de neutralisation est un ester d'acide acylacétique de formule:

$R^1COCH_2COOR^1$,

dans laquelle $R^1$ a le sens indiqué à ce propos à la revendication 2.

9. Procédé selon la revendication 1 ou 8, caractérisé en ce que le ou un agent de neutralisation est l'ester éthylique de l'acide acétoacétique.